# EUROPEAN PATENT APPLICATION

(11) **EP 4 513 952 A1**
(43) Date of publication of application: **26.02.2025**
(21) Application number: 23796716.1
(22) Date of filing: 21.04.2023
(51) Int. Cl.: H04W 28/02, H04W 8/24, H04W 76/20

(54) **METHOD AND DEVICE FOR PROCESSING XR MULTI-MODAL TRAFFIC IN WIRELESS COMMUNICATION SYSTEM**

(30) Priority: 27.04.2022 KR 20220052080
(71) Applicant: Samsung Electronics Co., Ltd., Suwon-si, Gyeonggi-do 16677 (KR)
(72) Inventor: LEE, Taeseop, Suwon-si, Gyeonggi-do 16677 (KR); KANG, Hyunjeong, Suwon-si, Gyeonggi-do 16677 (KR); AGIWAL, Anil, Suwon-si, Gyeonggi-do 16677 (KR)
(74) Representative: Gulde & Partner
(86) International application number: PCT/KR2023/005483
(87) International publication number: WO 2023/211069

(57) **Abstract**

The disclosure relates to a 5G or 6G communication system for supporting higher data transmission rate. According to various embodiments disclosed herein, a method performed by a terminal in a wireless communication system may comprise the steps of: receiving configuration information from a base station when first information related to an extended reality (XR) multi-modal traffic service is added or modified, wherein the configuration information instructs the reporting of second information related to the first information; transmitting the second information to the base station on the basis of the configuration information, wherein the second information includes at least one of traffic characteristic information about each of one or more data radio bearers (DRB) servicing the multi-modal traffic or new configuration information preferred by each of the one or more DRBs; and receiving a first radio resource control (RRC) reconfiguration message including modified information about each of the one or more DRBs.

## Description

### [Technical Field]

The disclosure relates to a method and a device for servicing extended reality (XR) multi-modal traffic in a wireless communication system.

Specifically, the disclosure relates to a method and a device for, when XR multi-modal traffic is serviced in a wireless communication system, adjusting a connection configuration of XR terminals by a base station to satisfy an XR service-related requirement.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave such as 28GHz and 39GHz. In addition, it has been considered to implement 6G mobile communication technologies (referred to as Beyond 5G systems) in terahertz bands (e.g., 95GHz to 3THz bands) in order to accomplish transmission rates fifty times faster than 5G mobile communication technologies and ultra-low latencies one-tenth of 5G mobile communication technologies.

At the beginning of 5G mobile communication technologies, in order to support services and to satisfy performance requirements in connection with enhanced Mobile BroadBand (eMBB), Ultra Reliable & Low Latency Communications (URLLC), and massive Machine-Type Communications (mMTC), there has been ongoing standardization regarding beamforming and massive MIMO for alleviating radio-wave path loss and increasing radio-wave transmission distances in mmWave, numerology (for example, operating multiple subcarrier spacings) for efficiently utilizing mmWave resources and dynamic operation of slot formats, initial access technologies for supporting multibeam transmission and broadbands, definition and operation of BWP (BandWidth Part), new channel coding methods such as a LDPC (Low Density Parity Check) code for large-capacity data transmission and a polar code for highly reliable transmission of control information, L2 preprocessing, and network slicing for providing a dedicated network customized to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-to-everything (V2X) for aiding driving determination by autonomous vehicles based on information regarding positions and states of vehicles transmitted by the vehicles and for enhancing user convenience, New Radio Unlicensed (NR-U) aimed at system operations conforming to various regulation-related requirements in unlicensed bands, NR UE Power Saving, Non-Terrestrial Network (NTN) which is UE-satellite direct communication for securing coverage in an area in which communication with terrestrial networks is unavailable, and positioning.

Moreover, there has been ongoing standardization in wireless interface architecture/protocol fields regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service fields regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with extended Reality (XR) for efficiently supporting Augmented Reality (AR), Virtual Reality (VR), Mixed Reality (MR), etc., 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for securing coverage in terahertz bands of 6G mobile communication technologies, Full Dimensional MIMO (FD-MIMO), multi-antenna transmission technologies such as array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

As described above, according to the development of wireless communication systems, a method for adjusting a connection configuration of XR terminals by a base station to process traffic of a service capable of improving users' sense of experience in an XR service, that is, a multi-modality service, and to satisfy an XR service-related requirement is required.

### [Disclosure of Invention]

### [Technical Problem]

In accordance with the above discussion, the disclosure is to provide a device and a method enabling effective provision of a service in a wireless communication system.

The disclosure provides a method and a device for, when extended reality (XR) multi-modal traffic is serviced, adjusting a connection configuration of XR terminals by a base station to satisfy an XR service-related requirement.

### [Solution to Problem]

According to various embodiments of the disclosure, a method performed by a terminal in a wireless communication system may include, in case that first information related to a service for extended reality (XR) multi-modal traffic is added or changed, receiving, from a base station, configuration information instructing to report second information related to the first information, based on the configuration information, transmitting, to the base station, the second information including at least one of traffic characteristic information on each of at least one data radio bearer (DRB) servicing the multi-modal traffic, or new configuration information preferred by each of the at least one DRB, and receiving, from the base station, a first radio resource control (RRC) reconfiguration message including changed information on each of the at least one DRB.

According to various embodiments of the disclosure, a method performed by a base station in a wireless communication system may include, in case that first information related to a service for extended reality (XR) multi-modal traffic is added or changed, transmitting, to a terminal, configuration information instructing to report second information related to the first information, based on the configuration information, receiving, from the terminal, the second information including at least one of traffic characteristic information on each of at least one data radio bearer (DRB) servicing the multi-modal traffic, or new configuration information preferred by each of the at least one DRB, and transmitting, to the terminal, a first radio resource control (RRC) reconfiguration message including changed information on each of the at least one DRB.

### [Advantageous Effects of Invention]

The disclosure provides a device and a method enabling effective provision of a service in a wireless communication system.

Advantageous effects obtainable from the disclosure may not be limited to the above-mentioned effects, and other effects which are not mentioned may be clearly understood from the following descriptions by those skilled in the art to which the disclosure pertains.

### [Brief Description of Drawings]

FIG. 1 illustrates a structure of a wireless communication system according to various embodiments of the disclosure;
FIG. 2 illustrates a wireless protocol structure in a wireless communication system according to various embodiments of the disclosure;
FIG. 3 illustrates an example of an extended reality (XR) multi-modal traffic service scenario according to various embodiments of the disclosure;
FIG. 4 illustrates another example of an extended reality (XR) multi-modal traffic service scenario according to various embodiments of the disclosure;
FIG. 5 illustrates a characteristic and a synchronization requirement of extended reality (XR) multi-modal traffic according to various embodiments of the disclosure;
FIG. 6 illustrates a signal flowchart for reconfiguring connection of XR service-related terminals, based on XR multi-modal traffic information according to various embodiments of the disclosure;
FIG. 7 illustrates a signal flowchart for adjusting resource allocation of XR service-related terminals, based on XR multi-modal traffic information according to various embodiments of the disclosure;
FIG. 8 illustrates a signal flowchart of a case where a base station fails in proper resource adjustment even when XR multi-modal traffic information is provided according to various embodiments of the disclosure;
FIG. 9 illustrates an example of information of an XR device group and an XR flow group according to various embodiments of the disclosure;
FIG. 10 illustrates a detailed example of adjusting a resource allocation parameter, based on XR multi-modal traffic information according to various embodiments of the disclosure;
FIG. 11 illustrates a terminal device according to various embodiments of the disclosure; and
FIG. 12 illustrates a base station device according to various embodiments of the disclosure.

### [Mode for the Invention]

Hereinafter, embodiments of the disclosure will be described in detail with reference to the accompanying drawings. In describing the disclosure below, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements.

It will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block(s). These computer program instructions may also be stored in a computer usable or computer-readable memory that can direct a computer or other programmable data processing apparatus to function in a particular manner. The instructions stored in the computer usable or computer-readable memory may produce an article of manufacture including instruction means that implement the function specified in the flowchart block(s). The computer program instructions may also be loaded onto a computer or any other programmable data processing apparatus. The instructions which execute on a computer or other programmable apparatus to cause a series of operational steps to be performed on the computer or other programmable apparatus to produce a computer implemented process may provide steps for implementing the functions specified in the flowchart block(s).

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in an embodiment of the disclosure may include one or more processors.

In describing the disclosure, a detailed description of known functions or configurations incorporated herein will be omitted when it is determined that the description may make the subject matter of the disclosure unnecessarily unclear. Hereinafter, embodiments of the disclosure will be described with reference to the accompanying drawings.

In the following description, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as described below, and other terms referring to subjects having equivalent technical meanings may also be used.

In the following description, the terms "physical channel" and "signal" may be interchangeably used with the term "data" or "control signal". For example, the term "physical downlink shared channel (PDSCH)" refers to a physical channel over which data is transmitted, but the PDSCH may also be used to refer to the "data". That is, in the disclosure, the expression "transmit ting a physical channel" may be construed as having the same meaning as the expression "transmitting data or a signal over a physical channel".

In the following description of the disclosure, upper signaling refers to a signal transfer scheme from a base station to a terminal via a downlink data channel of a physical layer, or from a terminal to a base station via an uplink data channel of a physical layer. The upper signaling may also be understood as radio resource control (RRC) signaling or a media access control (MAC) control element (CE).

In the following description of the disclosure, terms and names defined in the 3rd generation partnership project new radio (3GPP NR) or 3rd generation partnership project long term evolution (3GPP LTE) standards will be used for the sake of descriptive convenience. However, the disclosure is not limited by these terms and names, and may be applied in the same way to systems that conform other standards. In the disclosure, the term "gNB" may be interchangeably used with the term "eNB" for the sake of descriptive convenience. That is, a base station described as "eNB" may refer to "gNB".

In addition, the term "terminal" may refer to not only a machine-type communications (MTC) device, a narrowband-Internet of things (NB-IoT) device, and a sensor, but also other wireless communication devices. In the following description, a base station is an entity that allocates resources to terminals, and may be at least one of a gNode B (gNB), an eNode B (eNB), a Node B, a base station (BS), a wireless access unit, a base station controller, and a node on a network. A terminal may include a user equipment (UE), a mobile station (MS), a cellular phone, a smartphone, a computer, or a multimedia system capable of performing a communication function. However, according to various embodiments of the disclosure, examples of the base station and the terminal are not limited to those mentioned above.

The disclosure relates to a method and a device for servicing extended reality (XR) multi-modal traffic in a next generation wireless communication system. More specifically, the disclosure relates to a method and a device for, when XR multi-modal traffic is serviced, adjusting a connection configuration of XR terminals by a base station (e.g., gNB) to satisfy an XR service-related requirement.

According to various embodiments of the disclosure, a method in which a new requirement and assistance information for an XR multi-modal traffic service are defined, and a gNB adjusts a connection configuration of XR terminals to satisfy an XR service-related requirement, based on the defined requirement and information is described. To this end, specifically, an XR multi-modal traffic service scenario, an XR multi-modal traffic-related new requirement (e.g., time synchronization between multi-modal traffic), a method of transferring an XR multi-modal traffic-related requirement and assistance information to a gNB by a terminal and a core network (CN), and a method of reconfiguring connection of an XR terminal to satisfy an XR service requirement by a gNB, based on the transferred requirement and information are described.

Through the disclosure, a terminal and a CN may transfer an XR multi-modal traffic-related requirement and assistance information to a gNB. The terminal may report whether reporting of XR-related information is supported, to the gNB through terminal capability information (UE capability information). The gNB may instruct the terminal to report XR-related information by referring to terminal capability information reported by the terminal, and reconfigure connection of XR terminals to satisfy an XR service requirement, based on the information reported by the terminal.

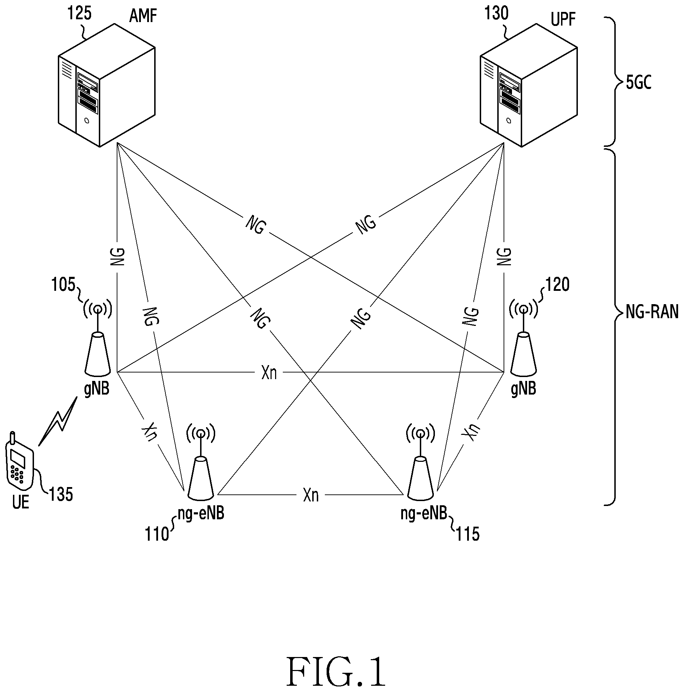

FIG. 1 illustrates a structure of a wireless communication system according to various embodiments of the disclosure.

Referring to FIG. 1, a wireless communication system may be configured by several base stations (e.g., a gNB 105, an ng-eNB 110, an ng-eNB 115, and a gNB 120), an access and mobility management function (AMF) 125, and a user plan function (UPF) 130. A user equipment (UE) 135 may access an external network through the base stations (e.g., the gNB 105, the ng-eNB 110, the ng-eNB 115, and the gNB 120) and the UPF 130.

In FIG. 1, the base stations (e.g., the gNB 105, the ng-eNB 110, the ng-eNB 115, and the gNB 120) serve as access nodes of a cellular network, and may provide wireless access to UEs accessing the network. The base stations (e.g., the gNB 105, the ng-eNB 110, the ng-eNB 115, and the gNB 120) may, in order to service traffic of users, obtain state information of UEs, such as a buffer state, an available transfer power state, and a channel state, and schedules the information to support connection between the UEs and a core network (CN) (e.g., particularly, a CN of new radio (NR) is called a 5GC). In a wireless communication system, a user plane (UP) related to transmission of actual user data and a control plane (CP) related to connection management may be configured separately. According to various embodiments of the disclosure, the gNB 105 and the gNB 120 may use UP and CP technologies defined in the NR technology, and the ng-eNB 110 and the ng-eNB 115 may use UP and CP technologies defined in the LTE technology although being connected to a 5GC.

The AMF 125 may be a device that performs a mobility management function for a UE and various control functions. The AMF 125 may be connected to multiple base stations. The UPF 130 may indicate a kind of gateway device providing data transmission. Although not illustrated in FIG. 1, an NR wireless communication system may include a session management function (SMF). The SMF may manage a packet data network connection, such as a protocol data unit (PDU) session provided to a UE.

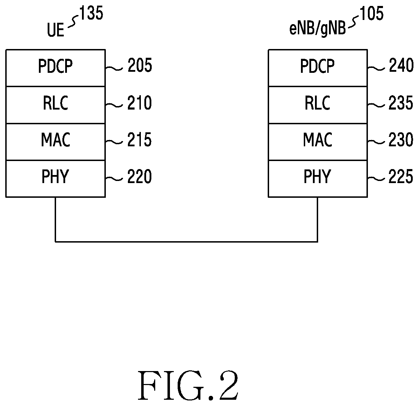

FIG. 2 illustrates a wireless protocol structure in a wireless communication system according to various embodiments of the disclosure.

Referring to FIG. 2, a wireless protocol of an LTE system may include a packet data convergence protocol (PDCP) 205 or 240, a radio link control (RLC) 210 or 235, and a medium access control (MAC) 215 or 230 in each of a UE and an evolved node B (eNB). The PDCP 205 or 240 may be responsible for an operation such as IP header compression/reconstruction. The radio link control (RLC) 210 or 235 may reconfigure a PDCP PDU to have a proper size. The MAC layer 215 or 230 may be connected to several RLC layer devices configured in a single UE, and perform an operation of multiplexing RLC PDUs to a MAC PDU and demultiplexing a MAC PDU to RLC PDUs. The physical (PHY) layer 220 or 225 may perform channel coding and modulation of higher layer data to make the data into OFDM symbols and transmit the OFDM symbols through a wireless channel. The physical layer 220 or 225 may perform an operation of performing demodulation and channel decoding of OFDM symbols received through a wireless channel, and then transferring the OFDM symbols to a higher layer. The physical layer may use a hybrid automatic repeat request (HARQ) for additional error correction. A physical layer of a reception node may transmit information on whether a packet transmitted by a transmission node has been received, by using 1 bit, and the transmitted information may be referred to as HARQ acknowledgement (ACK)/negative acknowledgement. Downlink HARQ ACK/NACK information for uplink data transmission may be transmitted through a physical hybrid-ARQ indicator channel (PHICH) in LTE. In NR, whether retransmission is required and whether a new transmission should be performed accordingly may be determined through scheduling information of a UE in a physical downlink control channel (PDCCH) which is a channel through which downlink/uplink resource allocation is transmitted. This is because NR employs asynchronous HARQ. Uplink HARQ ACK/NACK information for downlink data transmission may be transmitted through a physical uplink control channel (PUCCH) or a physical uplink shared channel (PUSCH). In general cases, a PUCCH may be transmitted in the uplink of a primary cell (PCell). If a UE supports a secondary cell (SCell), a base station may additionally transmit a PUSCH to the UE on an SCell, and this is called a PUSCH SCell.

Although not illustrated in FIG. 2, a radio resource control (RRC) layer may exist above each of the PDCP layers of the UE and the base station. The RRC layer may transmit or receive an access and measurement-related configuration control message for wireless resource control.

The PHY layer may be configured by one or multiple frequencies/carriers, and a technology in which multiple frequencies are simultaneously configured and used is called a carrier aggregation technology (carrier aggregation, CA). The CA technology may not use only one carrier for communication between a UE and a base station (E-UTRAN NodeB or eNB), and may use a primary carrier and one or multiple subcarriers additionally so as to remarkably increase a transmission amount by an amount corresponding to the number of the subcarriers. In LTE, a cell in a base station using primary carriers is called a main cell or a primary (PCell), and a cell in a base station using subcarriers is called a subcell or a secondary cell (SCell).

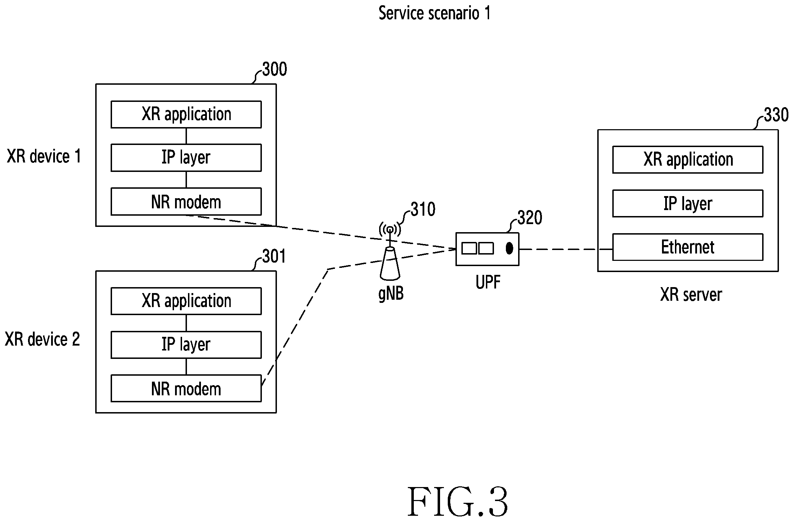

FIG. 3 illustrates an example of an extended reality (XR) multi-modal traffic service scenario according to various embodiments of the disclosure.

Referring to FIG. 3, one or more UEs 300 and 301 may perform an XR multi-modal traffic service together for the same XR service. The UEs 300 and 301 may correspond to XR devices having NR modems. The one or more UEs 300 and 301 may establish separate RRC connections to a gNB 310 for XR multi-modal traffic transmission or reception, and may establish separate PDU sessions for an XR service. Each UE 300 or 301 and an XR server 330 may transmit or receive XR multi-modal traffic through the gNB 310 and a UPF 320. Each UE 300 or 301 may transmit or receive one or more multi-modal traffics through one or more quality-of-service (QoS) flows, respectively. When there are multiple types of multi-modal traffics serviced by a particular UE 300 or 301, the multi-modal traffics may be serviced through separate QoS flows, respectively. Multi-modal traffics having similar QoS requirements may be transmitted or received together through one QoS flow. However, multi-modal traffics serviced by the different UEs 300 and 301 are unable to be transferred through the same QoS flow.

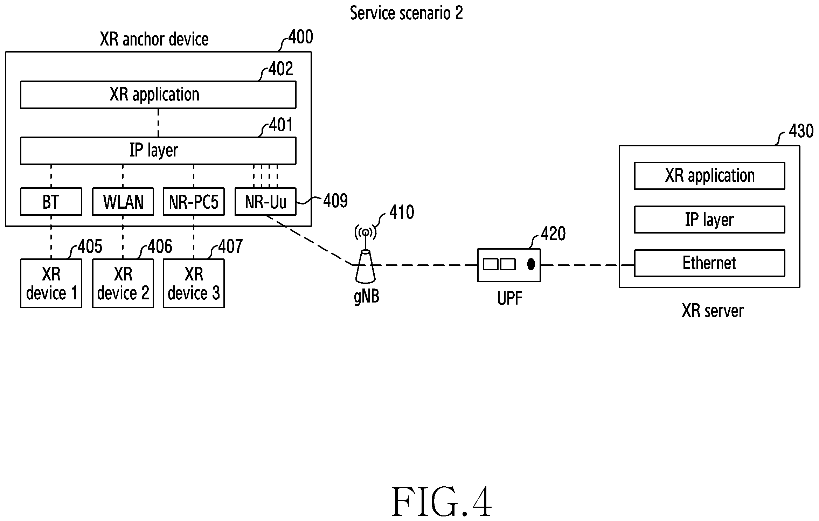

FIG. 4 illustrates another example of an extended reality (XR) multi-modal traffic service scenario according to various embodiments of the disclosure.

Referring to FIG. 4, a UE 400 may be an anchor device of one or multiple UEs 405, 406, and 407 performing an XR multi-modal traffic service. The one or multiple UEs 405 and 406 may be XR devices not having NR modems, and may be connected to the XR anchor device by using different communication interfaces, so as to transmit or receive multi-modal traffic to or from an XR server 430. The different communication interfaces may include Bluetooth (BT), a wireless local area network (WLAN), etc. The UE 407 has an NR modem, but does not transmit XR multi-modal traffic to a gNB 410 through direct connection, and may establish an NR side link with the UE 400 functioning as an anchor device and transmit or receive XR multi-modal traffic through an NR PC5 interface. The UEs 405, 406, and 407 may transfer XR multi-modal traffic of an IP packet type to the UE 400 functioning as an anchor device. An internet protocol (IP) layer 401 of the UE 400 may use an NR UU interface 409 to transfer, to the XR server 430, multi-modal traffic transferred from the other XR UEs 405, 406, and 407 or multi-modal traffic generated in an internal XR application layer 402 of the UE. The IP layer 401 of the UE 400 may transfer multi-modal traffic received through the NR UU interface 109 to the internal XR application layer 402 or the other XR UEs 405, 406, and 407.

The XR anchor device UE 400 may generate an RRC connection with the gNB 410 for XR multi-modal traffic transmission or reception, and establish a separate PDU session for an XR service. The UE 400 and the XR server 430 may transmit or receive XR multi-modal traffic through the gNB 410 and a UPF 420. The XR anchor device UE 400 may transmit or receive one or multiple multi-modal traffics through one or multiple QoS flows. When there are multiple types of multi-modal traffics serviced by the XR anchor device UE 400, the multi-modal traffics may be serviced through separate QoS flows, respectively. Multi-modal traffics having similar QoS requirements may be transmitted or received together through one QoS flow. Multi-modal traffics serviced by other UEs 405, 406, and 407 may be transferred through the same QoS flow or be transferred through different QoS flows, respectively.

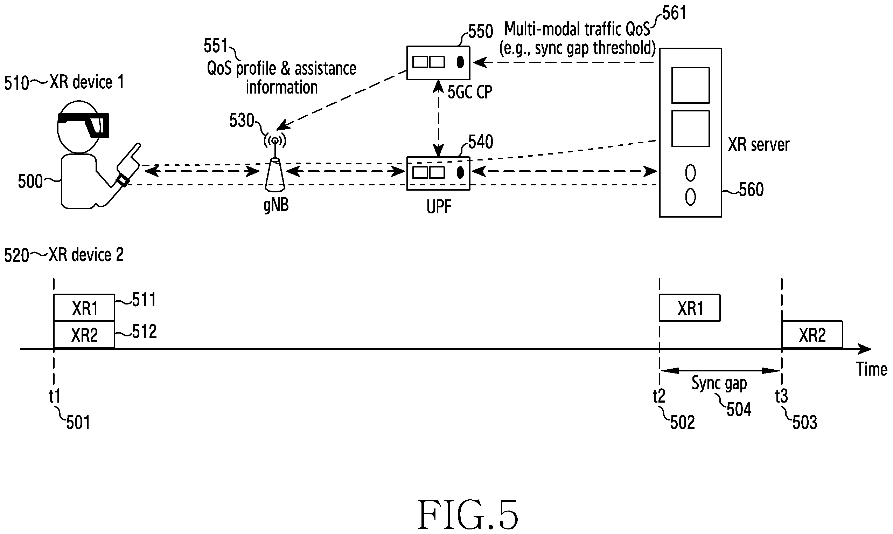

FIG. 5 illustrates a characteristic and a synchronization requirement of extended reality (XR) multi-modal traffic according to various embodiments of the disclosure.

Referring to FIG. 5, an XR service user 500 may simultaneously use one or multiple XR device UEs 510 and 520 for a particular XR service. The XR device UEs 510 and 520 may service multi-modal traffic of various types (e.g., audio, video, haptic data, etc.). The XR device UEs 510 and 520 may generate multi-modal traffics 511 and 521 associated with particular time point t1 501, and then transmit the traffics to an XR server 560. Traffic transmitted by the XR device UEs 510 and 520 to a gNB 530 through NR connection may be transferred to the XR server 560 via a UPF 540. Due to the difference between delay times having occurred in a traffic transmission process, the multi-modal traffics 511 and 521 associated with t1 501 may arrive at the XR server 560 at different times t2 502 and t3 503, respectively. If an occurred arrival time difference (sync gap) 504 exceeds a particular threshold (sync gap threshold), the XR server 560 may have a problem with processing the multi-modal traffic. The occurred problem may eventually cause degradation of a service quality of experience (QoE) experienced by the XR service user 500. Therefore, when XR multi-modal traffic is serviced in a 5G communication network, a QoS requirement for synchronization of transmission times of multi-modal traffics simultaneously generated at a particular time point may be newly defined.

A new QoS requirement 561 for XR multi-modal traffic may include a maximum allowable threshold (sync gap threshold) for the difference (sync gap) between times required for transmitting multi-modal traffics generated together at a particular time point, and a maximum allowable threshold (sync failure rate threshold) for a ratio of packets having arrived to exceed the sync gap threshold. A QoS-related requirement (e.g., packet delay budget, packet error rate, maximum data burst volume, etc.) supported in conventional 4G/5G systems may also be included in the QoS requirement 561 for XR multi-modal traffic. The XR server 560 may transfer the requirement 561 for multi-modal traffic to a 5G core control plane (5GC CP) 550. The 5GC CP 550 may transfer, to the gNB 530, QoS requirement and traffic characteristic information 551, configured by a network service provider or provided by the XR server 560, for an XR multi-modal traffic service. The QoS requirement and the traffic characteristic information may be provided in a unit of an individual QoS flow or in a unit of a group (XR flow group) of multiple QoS flows used for transmitting multi-modal traffic of the same XR service. The gNB 530 may adjust resource allocation and a connection configuration of the XR device UEs 510 and 520, based on the XR multi-modal traffic-related requirement and information 551 received from the 5GC CP 550, so as to satisfy an XR multi-modal traffic service-related QoS requirement (e.g., time synchronization between multi-modal traffic). The XR multi-modal traffic service-related QoS requirement and traffic information 551 and 561 may also be generated in the XR device UEs 510 and 520 other than the XR server 560, and the XR device UEs 510 and 520 may provide the generated QoS requirement and traffic information to the gNB 530 and the 5GC CP 550.

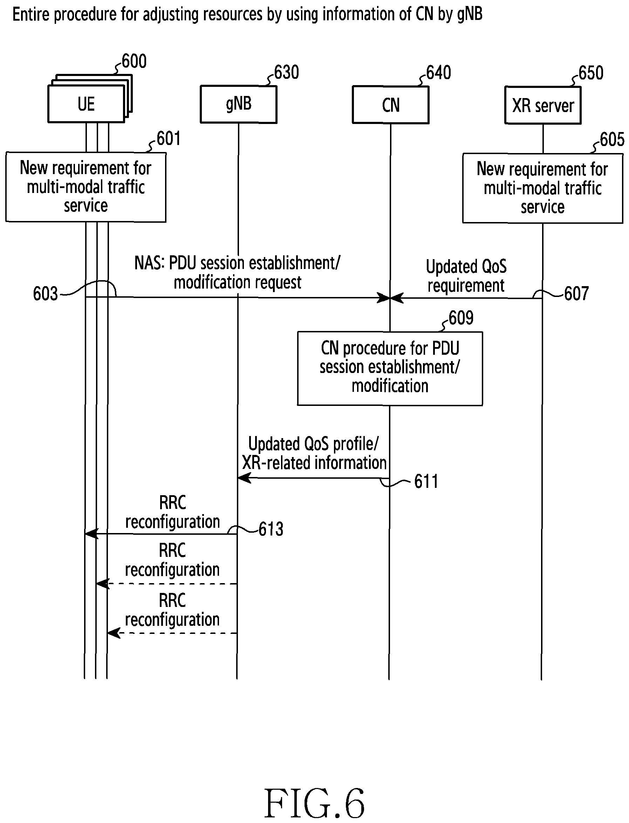

FIG. 6 illustrates a signal flowchart for reconfiguring connection of XR service-related UEs, based on XR multi-modal traffic information according to various embodiments of the disclosure.

Referring to FIG. 6, a UE 600 may have at least one of information on a QoS flow or a QoS requirement needed by an XR multi-modal traffic service. The UE 600 may correspond to an anchor device of one or multiple UEs performing the XR multi-modal traffic service, or a single device performing the XR multi-modal traffic service.

Referring to operation 601, when an XR multi-modal traffic service application is newly added or a new device capable of the XR multi-modal traffic service is newly added, the UE 600 may determine whether there is a need to create a new QoS flow for the usage of the XR multi-modal traffic service, or whether there is a need to change an existing QoS flow having been created for the usage of the XR multi-modal traffic service.

Referring to operation 603, the UE 600 may transmit a PDU session establishment message or a PDU session modification (session modification request) message to a CN entity 640 managing QoS flow creation, modification, and removal. The message transmitted by the UE 600 may correspond to a message processed in a non-access stratum (NAS) layer of the UE 600. The message transmitted by the UE 600 may include at least one of new/changed QoS requirement information of the XR multi-modal traffic service, and information on a PDU session type (multi-modal) or session management capability (supportable multi-modal device type (e.g., one-device and/or multi-device)).

Referring to operation 605, an XR server 650 may have at least one of XR multi-modal traffic service application information and QoS requirement information required by an XR multi-modal traffic service application. If an XR multi-modal traffic service application of the UE 600 is newly added or a new UE capable of the XR multi-modal traffic service is newly added, the XR server 650 may need to transfer QoS requirement information required by the XR multi-modal traffic service to the CN entity 640.

Referring to operation 607, the XR server 650 may transfer a new QoS requirement or a QoS requirement to be changed to the CN entity 640.

According to an embodiment, a procedure of operation 601 to operation 603 and a procedure of operation 605 to operation 607 may be independently generated. According to an embodiment, a procedure of operation 605 to operation 607 of the XR server 650 may be generated by a procedure of operation 601 to operation 603 of the UE 600. According to an embodiment, a procedure of operation 601 to operation 603 of the UE 600 may be generated by a procedure of operation 605 to operation 607 of the XR server 650.

Referring to operation 609, the CN entity 640 may determine whether to configure a new PDU session for a new QoS flow or whether to change a PDU session in order to change an existing QoS flow, based on information on the XR multi-modal traffic service obtained from the UE 600 in operation 603 and information on the XR multi-modal traffic service obtained from the XR server 650 in operation 607. The CN entity 640 may perform a new PDU session configuration procedure with the UE 600 or perform an existing PDU session modification procedure with the UE 600.

Referring to operation 611, when a new QoS flow is created or an existing QoS flow is changed by configuration of a new PDU session for the XR multi-modal traffic service or change of an existing PDU session for the XR multi-modal traffic service, the CN entity 640 may provide an updated QoS profile to a gNB 630. If it is determined that an XR device group and/or an XR flow group is changed in relation to the XR multi-modal service to which QoS flow creation/change is applied, the CN entity 640 may transmit updated XR device group and/or XR flow group information to the gNB 630. The CN entity 640 may transmit, to the gNB 630, updated synchronization requirement information for the XR device group and/or XR flow group (e.g., at least one of a sync gap threshold (a maximum allowable sync gap between multi-modal traffics for the same XR service), or a sync failure rate threshold (a maximum allowable percentage of sync failed packets within the XR flow group). The CN entity 640 may transmit, to the gNB 630, traffic characteristic information (e.g., at least one of a period (periodicity), an estimated packet arrival time, a packet size, or an allowable PER) for XR multi-modal traffic with information of a newly created/changed QoS flow for the XR multi-modal traffic service. The CN entity 640 may transmit, to the gNB 630, at least one of a 5 QoS identifier (5QI) of the new/changed QoS flow, a reflective QoS attribute (RQA), a flow bit rate, an aggregate bit rate, a maximum packet loss rate, a resource type (e.g., non-GBR, GBR, or delay-critical GBR), a packet delay budget (PDB), a packet error rate (PER), and a maximum data burst volume.

Referring to operation 613, the gNB 630 may transmit an RRC reconfiguration (RRCReconfiguration) message that updates a configuration of the UE 600, based on QoS requirement information of a QoS flow for the XR multi-modal traffic service and the QoS profile obtained from the CN entity 140 in operation 611. Although not illustrated in FIG. 6, the UE 600 may transmit, to the gNB 630, assistance information including at least one of a QoS requirement for a new QoS flow or a changed QoS flow, a synchronization requirement, or traffic characteristic information. According to an embodiment, the gNB 630 may transmit an RRCReconfiguration message that updates a configuration of the UE 600, based on the assistance information of the UE 600.

If synchronization requirement information for an XR device group and/or XR flow group corresponding to the XR multi-modal traffic service is updated, the gNB 630 may update a configuration of DRBs, logical channels, etc. of several UEs belonging to the XR device group and/or XR flow group together. The gNB 630 may transmit an RRCReconfiguration message to each of the UEs belonging to the XR device group and/or XR flow group. The gNB 630 may transmit an RRCReconfiguration message to a UE corresponding to an anchor device of several UEs belonging to the XR device group and/or XR flow group.

If traffic characteristic information for a particular QoS flow is changed, the gNB 630 may transmit, based on the changed information and to the UE 600, an RRCReconfiguration message that updates at least one of a configured grant (CG) parameter for the UE 600, and a UL/DL grant scheduling or semi-persistent scheduling (SPS) parameter configuration. If preferred configured grant (CG) parameter information for a particular data radio bearer (DRB) of the UE 600 is changed, the gNB 630 may transmit, to the UE 600, an RRCReconfiguration message that updates a CG parameter configuration for the UE 600, based on the changed information. The UE 600 may obtain updated configuration information for the XR multi-modal traffic service through the gNB 630 to process at least one of downlink/uplink DRB and logical channel configuration information corresponding to the XR multi-modal traffic service, uplink transmission resource scheduling information, or downlink/uplink traffic transmission or reception.

Referring to operation 613, when one or more UEs belonging to the XR device group and/or XR flow group are connected to different gNBs, the configuration information transmitted by the gNB to the UE may be obtained through a corresponding gNB to which each UE is connected. In this case, at least one of synchronization requirement information for the XR device group and/or XR flow group corresponding to the multi-modal traffic service, traffic characteristic information, configured grant (CG) parameter information, or uplink and downlink traffic resource scheduling information may be exchanged in at least one signaling among signaling between a gNB and another gNB, signaling between a CU and a CU, signaling between a CU and a DU, or signaling between a DU and a DU.

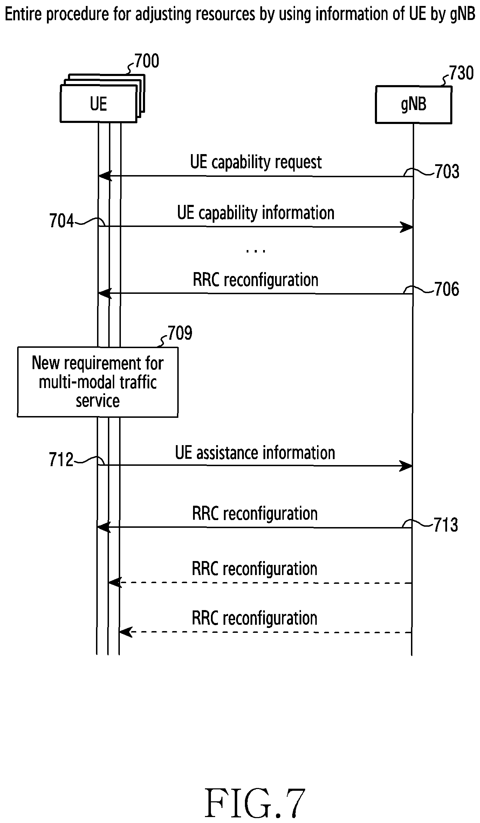

FIG. 7 illustrates a signal flowchart for adjusting resource allocation of XR service-related UEs, based on XR multi-modal traffic information according to various embodiments of the disclosure.

Referring to FIG. 7, a UE 700 may correspond to an anchor device of one or multiple UEs performing an XR multi-modal traffic service, or a single device performing the XR multi-modal traffic service.

Referring to operation 703, a gNB 730 may transfer a UE capability request (*UECapabilityEnquiry*) message that requests capability reporting from the UE 700 being in a connected state. The *UECapabilityEnquiry* message transmitted by the gNB 730 may include a UE capability request for each RAT type. The request for each RAT type may include requested frequency band information. According to an embodiment, when the gNB 730 requests the UE 700 to generate a *UECapabilityInformation* message, a transmitted request message may include filtering information that is able to indicate a condition and a limitation. The gNB 730 may indicate, through the filtering information, whether the UE 700 needs to report a capability capable of reporting information related to the XR multi-modal traffic service (e.g., at least one of a QoS requirement, a multi-modal traffic characteristic, an XR flow group, an XR device group, or configuration information preferred for each DRB and logical channel).

Referring to operation 704, the UE 700 may configure a UE capability information (*UECapabilityInformation*) message corresponding to the *UECapabilityEnquiry* message, to report a response for the request to the gNB 730. The *UECapabilityInformation* message may include a parameter indicating whether the UE 700 is able to report information related to the XR multi-modal traffic service. The gNB 730 may determine, based on the received *UECapabilityInformation* message, whether the UE 700 is able to report information related to the XR multi-modal traffic service.

Referring to operation 706, in a case where the UE 700 determines that the UE is able to report information related to the XR multi-modal traffic service, when information related to the XR multi-modal traffic service is newly added and changed due to addition of an XR multi-modal traffic service or addition of a new XR device, the gNB 730 may instruct, through an RRCReconfiguration message, the UE 700 to report the added and changed information.

Referring to operation 709, when an XR multi-modal traffic service application is newly added, a new device capable of the XR multi-modal traffic service is newly added, or new XR multi-modal traffic is newly added, the UE 700 may determine whether there is a need to create a new QoS flow, or whether there is a need to change an existing QoS flow having been created for the usage of the XR multi-modal traffic service.

If it is determined that QoS flow creation, modification, or removal is required, the UE 700 may perform a procedure described with reference to FIG. 7. When an XR multi-modal traffic service application is newly added or a new device capable of the XR multi-modal traffic service is newly added, the UE 700 may reuse, without change, an existing QoS flow having been created for the usage of the XR multi-modal traffic service. Referring to operation 709, the UE 700 may determine whether a configuration of a DRB and a logical channel being used for an existing QoS flow service needs to be changed, based on a new QoS requirement of a newly added XR multi-modal traffic service.

Referring to operation 712, when it is determined that a configuration of a pre-configured DRB and logical channel needs to be changed for a new XR multi-modal traffic service, the UE 100 may transfer, to the gNB 730, information on change of the configuration of the DRB and the logical channel required for the new XR multi-modal traffic service.

If it is determined that an XR device group and/or an XR flow group is changed in relation to the new or existing XR multi-modal traffic service, the UE 700 may transmit updated XR device group and/or XR flow group information to the gNB 730. The UE 700 may transmit, to the gNB 730, updated synchronization requirement information for the XR device group and/or XR flow group (e.g., at least one of a sync gap threshold (a maximum allowable sync gap between multi-modal traffics for the same XR service), or a sync failure rate threshold (a maximum allowable percentage of sync failed packets within the XR flow group).

The UE 700 may transmit, to the gNB 730, traffic characteristic information (e.g., at least one of periodicity, an estimated packet arrival time, a packet size, or an allowable PER) for XR multi-modal traffic to be serviced through each DRB needed to be newly changed for the new XR multi-modal traffic service. The UE 700 may transmit, to the gNB 730, new configuration information (e.g., at least one of a CG configuration (periodicity, a time domain offset, or configuredGrantTimer), or an SPS configuration (periodicity or an activation time)) preferred for each DRB and logical channel needed to be changed for the new XR multi-modal traffic service. Referring to operation 712, a message transmitted by the UE 700 may correspond to a message processed in an RRC layer of the UE 700, a *UEAssistanceInformation* message defined in an existing RRC specification, or a message newly defined for the XR multi-modal traffic service.

Referring to operation 713, the gNB 730 may transmit, to the UE 700, an RRCReconfiguration message that updates a configuration of the UE 700, based on information obtained from the UE 700. If synchronization requirement information for an XR device group and/or XR flow group corresponding to the XR multi-modal traffic service is updated, the gNB 730 may update a configuration of DRBs, logical channels, etc. of several UEs belonging to the XR device group and/or XR flow group together. Referring to operation 713, the gNB 730 may transmit an RRCReconfiguration message to each of the UEs belonging to the XR device group and/or XR flow group, or may transmit an RRCReconfiguration message to a UE corresponding to an anchor device of several UEs belonging to the XR device group and/or XR flow group.

If traffic characteristic information for a particular DRB and logical channel is changed, the gNB 730 may transmit, based on the changed information and to the UE 700, an RRCReconfiguration message that updates at least one of a CG parameter for the UE 700, and a UL/DL grant scheduling or SPS parameter configuration. The UE 700 may obtain updated configuration information for the XR multi-modal traffic service from the gNB 730 to process at least one of downlink/uplink DRB and logical channel configuration information corresponding to the XR multi-modal traffic service, uplink transmission resource scheduling information, or downlink/uplink traffic transmission or reception.

When one or more UEs belonging to the XR device group and/or XR flow group are connected to different gNBs, each UE may obtain the configuration information transmitted by the gNB to the UE in operation 713, through a corresponding gNB connected thereto. For seamless provision of the XR multi-modal traffic service when the UE 700 performs handover to another gNB, a source gNB may transfer, to a target gNB, information provided by the UE 700 in operation 712 and information configured by the gNB 730 in operation 713. At least one of synchronization requirement information for the XR device group and/or XR flow group corresponding to the multi-modal traffic service, traffic characteristic information, configured grant (CG) parameter information, semi-persistent scheduling (SPS) parameter information, or uplink and downlink traffic resource scheduling information may be exchanged in at least one signaling among signaling between a gNB and another gNB (e.g., a source gNB and a target gNB), signaling between a CU and another CU, signaling between a CU and a DU, or signaling between a DU and another DU.

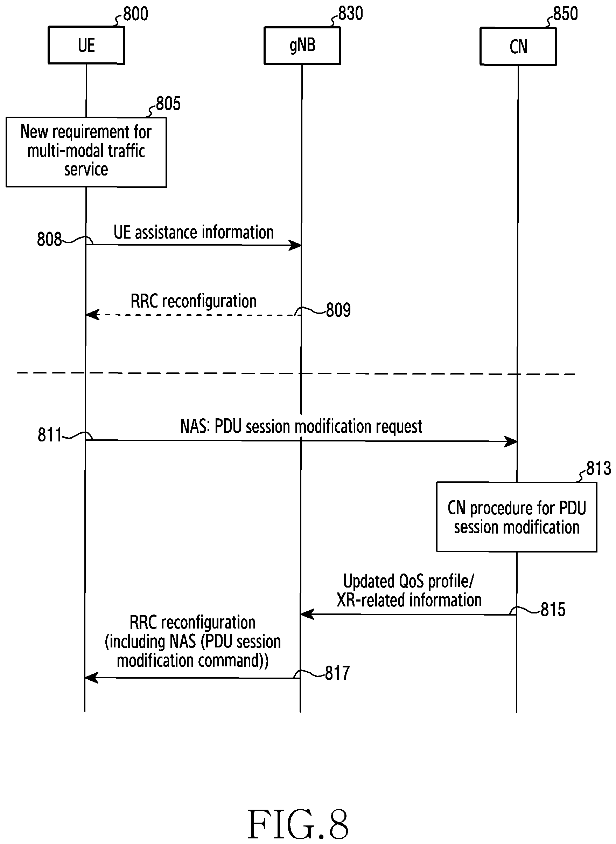

FIG. 8 illustrates a signal flowchart of a case where a base station fails in proper resource adjustment even when XR multi-modal traffic information is provided according to various embodiments of the disclosure.

Referring to FIG. 8, a UE 800 may correspond to an anchor device of one or multiple UEs performing an XR multi-modal traffic service, or a single device performing the XR multi-modal traffic service.

Referring to operation 805, when an XR multi-modal traffic service application is newly added or a new device capable of the XR multi-modal traffic service is newly added, the UE 800 may determine whether a configuration of a DRB and a logical channel being used for an existing QoS flow service needs to be changed, based on a new QoS requirement of a newly added XR multi-modal traffic service.

Referring to operation 808, when it is determined that a configuration of a pre-configured DRB and logical channel needs to be changed for the new XR multi-modal traffic service, the UE 800 may transfer, to the gNB 830, information on change of the configuration of the DRB and the logical channel required for the new XR multi-modal traffic service.

Referring to operation 809, the gNB 830 may transfer, to the UE 800, an RRCReconfiguration message including new connection configuration information capable of satisfying a requirement of the XR multi-modal traffic service, based on information obtained from the UE. According to an embodiment, the gNB 830 may provide connection configuration information incapable of satisfying the requirement of the XR multi-modal traffic service or not provide the new connection configuration information due to a limitation of performance or available resources.

Referring to operation 811, when the gNB 830 provides connection configuration information incapable of satisfying a requirement of the XR multi-modal traffic service or does not provide new connection configuration information, the UE 800 may give up reuse of an existing QoS flow and DRB for the XR multi-modal traffic service, and attempt to create a new QoS flow or change the existing QoS flow. In operation 811, the UE 800 may transmit a PDU session modification request message to a CN entity 850 managing QoS flow creation, modification, and removal. The CN entity 850 may perform a PDU session modification procedure with the UE 800.

Referring to operation 815, when a new QoS flow is created or an existing QoS flow is changed by change of an existing PDU session for the XR multi-modal traffic service, the CN entity 850 may provide an updated QoS profile to the gNB 830.

Referring to operation 817, the gNB 830 may transmit, to the UE 800, an RRCReconfiguration message that updates a configuration of the UE 800, based on QoS requirement information of a QoS flow for the XR multi-modal traffic service and the QoS profile obtained from the CN entity 850.

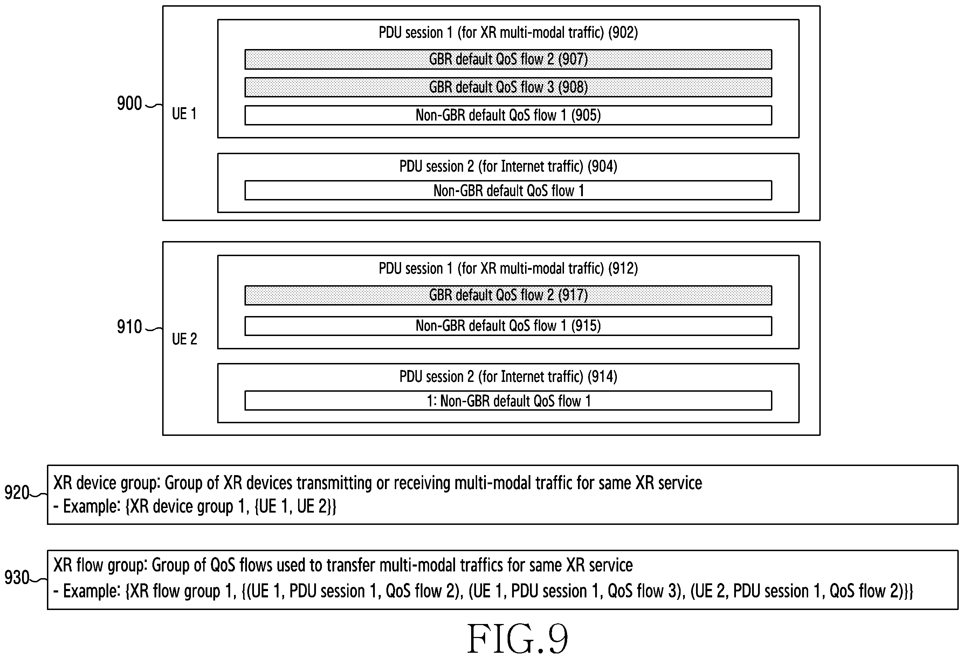

FIG. 9 illustrates an example of information of an XR device group and an XR flow group according to various embodiments of the disclosure.

Referring to FIG. 9, UEs 900 and 910 may each correspond to an anchor device of one or multiple UEs performing an XR multi-modal traffic service, or a single device performing the XR multi-modal traffic service. The UEs 900 and 910 may use one or multiple PDU sessions 902, 904, 912, and 914 for an Internet service and an XR service. The UEs 900 and 910 may use one or multiple QoS flows 905, 907, 908, 914, 915, and 917 for each PDU session. The PDU sessions 902 and 912 for the XR service may include non-GBR QoS flows 905 and 915 for control signaling with an XR server, and non-GBR or GBR QoS flows 907, 908, and 917 for transmitting or receiving XR multi-modal traffic.

UE 1 900 and UE 2 910 may perform an XR multi-modal traffic service together for an XR service for a particular user. A combination of the one or multiple UEs 900 and 910 used together for the same XR service may be defined as an XR device group 920. Information on the XR device group 920 may be generated in a unit of an XR service, and each XR device group information may include an XR device group ID and an ID combination of one or multiple UEs belonging to the group. As a UE ID, at least one of an international mobile subscriber identity (IMSI), a 5G-global unique temporary identifier (5G-GUTI), a 5G-system architecture evolution (SAE)-temporary mobile subscriber identity (5G-S-TIMSI), or a 5G- temporary mobile subscriber identity (5G-TMSI) may be used.

Although not illustrated in FIG. 9, a gNB may receive information on an XR device group from a UE and a CN entity. In a case where the UE provides information on the XR device group 920 to the gNB, each UE may provide, to the gNB, an XR device group ID to which a corresponding UE belongs. In a case where the CN entity provides information on the XR device group 920 to the gNB, an XR device group ID and an ID combination of at least one UE belonging to the group may be provided for each XR service. The gNB may adjust configuration information (e.g., a BWP configuration, a TDD configuration, a DRX configuration, etc.) of UEs belonging to the same XR device group 920 together, based on XR device group information for time synchronization between multi-modal traffics.

A combination of the QoS flows 907, 908, and 917 used for the same XR multi-modal traffic service may be defined as an XR flow group 930. Information on the XR flow group 930 may be generated in a unit of an XR service, and each XR flow group information may be an XR flow group ID and a combination of at least one QoS flow belonging to the group. In order to indicate a particular QoS flow, at least one of a UE ID, a PDU session ID, or a QoS flow ID may be used. Although not illustrated in FIG. 9, a gNB may receive information on an XR flow group from a UE or a CN entity. In a case where the UE provides information on the XR flow group 930 to the gNB, each UE may report at least one of (1) an XR flow group ID associated with each DRB, (2) at least one [UE ID, QoS flow ID, PDU session ID] for indicating QoS flows belonging to an XR flow group associated with each DRB, or (3) at least one [current DRB ID(s), UE ID of other UE, DRB ID(s) of other UE] for indicating DRBs belonging to an XR flow group associated with each DRB. In a case where the CN entity provides information on the XR flow group 930 to the gNB, an XR flow group ID and a combination of at least one QoS flow belonging to the group may be provided for each XR service. The gNB may adjust resource allocation information (e.g., an SPS configuration, a configured grant configuration, a dynamic grant configuration, etc.) for QoS flows belonging to the same XR flow group, based on information on the XR flow group 930 for time synchronization between multi-modal traffics.

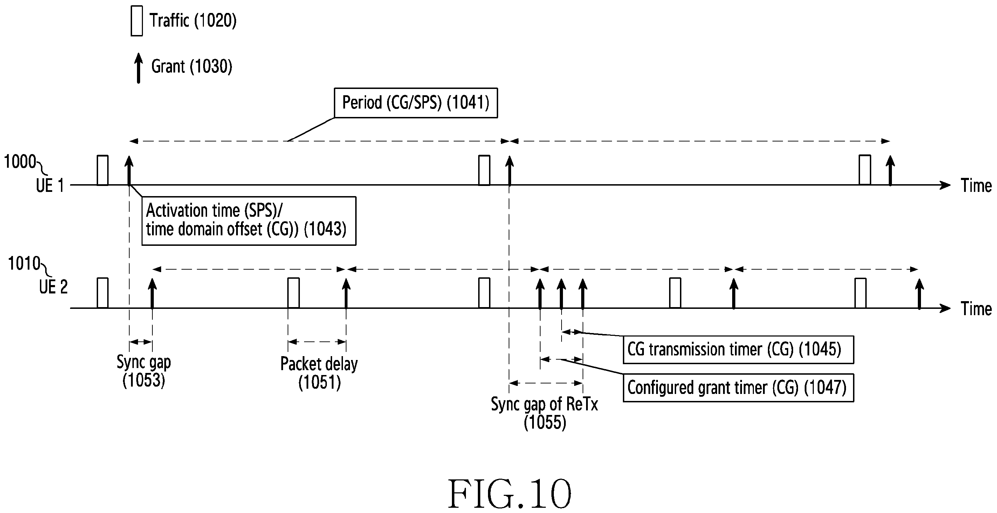

FIG. 10 illustrates a detailed example of adjusting a resource allocation parameter, based on XR multi-modal traffic information according to various embodiments of the disclosure.

Referring to FIG. 10, UE 1 1000 and UE 2 1010 may perform an XR multi-modal traffic service together for an XR service for a particular user. Information on at least one of a time synchronization requirement (e.g., at least one of a sync gap threshold or a sync failure rate threshold) for XR multi-modal traffic transmitted or received between the two UEs, traffic characteristic information (e.g., at least one of periodicity, an estimated packet arrival time, a packet size, or an allowable PER), or a QoS requirement (e.g., at least one of a 5QI, an RQA, a flow bit rate, an aggregate bit rate, a maximum packet loss rate, a resource type (e.g., non-GBR, GBR, or delay-critical GBR), a PDB, a PER or a maximum data burst volume) may be transferred to a gNB from a UE or a CN entity. The gNB providing a service for the two UEs 1000 and 1010 may configure at least one of a CG parameter and a UL/DL grant scheduling or SPS parameter for the UEs 1000 and 1010 to service multi-modal traffic, based on received pieces of information. The gNB may determine a value of periodicity 1041, based on period information of multi-modal traffic. The gNB may configure an SPS activation time-and-CG time domain offset (timeDomainOffset) 1043 so that a packet delay 1051 (a time required for, after traffic arrives at a DL/UL buffer, receiving a DL/UL grant and actually transmitting the traffic) generated when multi-modal traffic is transmitted, and a sync gap 1053 (the difference between time points at which multi-modal traffics associated with/generated at a particular time point are actually transmitted) satisfy a requirement (e.g., a sync gap threshold, a packet delay budget, etc.) provided by a UE/the CN entity. The gNB may configure values of CG-RetransmissionTime 1045 and configuredGrantTimer 1047 by considering a value of a sync gap 1055 with ReTx expected at the time of a CG retransmission operation and the requirement (e.g., a sync gap threshold, a packet delay budget, etc.) provided by a UE/the CN entity.

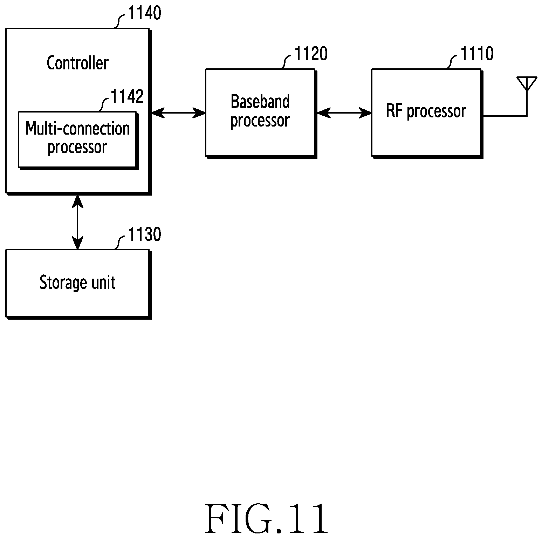

FIG. 11 illustrates a UE device according to various embodiments of the disclosure.

Referring to FIG. 11, a UE may include a radio frequency (RF) processor 1110, a baseband processor 1120, a storage unit 1130, and a controller 1140. The configuration of the UE is not limited to the exemplary configuration illustrated in FIG. 11, and the UE may include more or fewer elements, compared to the elements illustrated in FIG. 11.

The RF processor 1110 may perform a function, such as signal band change, amplification, etc., for transmitting or receiving a signal through a wireless channel. For example, the RF processor 1110 may upconvert a baseband signal provided from the baseband processor 1120, into an RF band signal, and then transmit the RF band signal through an antenna, and may downconvert an RF band signal received through an antenna, into a baseband signal. For example, the RF processor 1110 may include a transmission filter, a reception filter, an amplifier, a mixer, an oscillator, a digital-to-analog converter (DAC), an analog-to-digital converter (ADC), and the like, but is not limited to the example. In FIG. 11, only one antenna is illustrated, but the UE may include a plurality of antennas. Furthermore, the RF processor 1110 may include a plurality of RF chains. Moreover, the RF processor 1110 may perform beamforming. To perform beamforming, the RF processor 1110 may adjust the phase and size of each of the signals transmitted or received through a plurality of antennas or antenna elements. In addition, the RF processor 1110 may perform MIMO, and may receive several layers when a MIMO operation is performed.

The baseband processor 1120 may perform a function of conversion between a baseband signal and a bitstream according to a physical layer specification of a system. For example, at the time of data transmission, the baseband processor 1120 may generate complex symbols by encoding and modulating a transmission bitstream. In addition, at the time of data reception, the baseband processor 1120 may reconstruct a reception bit stream by demodulating and decoding a baseband signal provided from the RF processor 1110. For example, in a case where an orthogonal frequency division multiplexing (OFDM) scheme is applied, when data is transmitted, the baseband processor 1120 may generate complex symbols by encoding and modulating a transmission bitstream, map the generated complex symbols to subcarriers, and then configure OFDM symbols through inverse fast Fourier transform (IFFT) calculation and cyclic prefix (CP) insertion. In addition, at the time of data reception, the baseband processor 1120 may divide a baseband signal provided from the RF processor 1110, by the units of OFDM symbols, reconstruct signals mapped to subcarriers, through a fast Fourier transform (FFT) operation, and then reconstruct a reception bit stream through demodulation and decoding.

The baseband processor 1120 and the RF processor 1110 may transmit and receive a signal as described above. Accordingly, the baseband processor 1120 and the RF processor 1110 may be called a transmitter, a receiver, a transceiver, or a communication unit. Furthermore, at least one of the baseband processor 1120 and the RF processor 1110 may include a plurality of communication modules to support a plurality of different wireless access technologies. In addition, at least one of the baseband processor 1120 and the RF processor 1110 may include different communication modules to process signals of different frequency bands. For example, the different wireless access technologies may include wireless LAN (e.g., IEEE 802.11), cellular network (e.g., LTE), etc. Furthermore, the different frequency bands may include a super high frequency (SHF) (e.g., 2.NRHz, NRHz) band, a millimeter (mm) wave (e.g., 60 GHz) band, etc. The UE may transmit or receive a signal to or from a gNB by using the baseband processor 1120 and the RF processor 1110, and the signal may include control information and data.

The storage unit 1130 may store data such as a basic program, an application program, and configuration information for an operation of the UE. For example, the storage unit 1130 may store data information, such as a basic program, an application program, and configuration information for an operation of the UE. The storage unit 1130 may provide stored data in response to a request of the controller 1140.

The storage unit 1130 may be configured by a storage medium such as a ROM, a RAM, a hard disk, a CD-ROM, and a DVD, or a combination of storage mediums. In addition, the storage unit 1130 may be configured by a plurality of memories. According to an embodiment of the disclosure, the storage unit 1130 may store a program for performing a handover method according to the disclosure.

The controller 1140 may control overall operations of the UE. For example, the controller 1140 may transmit or receive a signal via the baseband processor 1120 and the RF processor 1110.

In addition, the controller 1140 may record and read data in and from the storage unit 1130. To this end, the controller 1140 may include at least one processor. For example, the controller 1140 may include a communication processor (CP) performing control for communication, and an application processor (AP) controlling a higher layer, such as an application program. In addition, according to an embodiment of the disclosure, the controller 1140 may include a multi-connection processor 1142 configured to process a process operated in a multi-connection mode. In addition, at least one element in the UE may be implemented as a single chip.

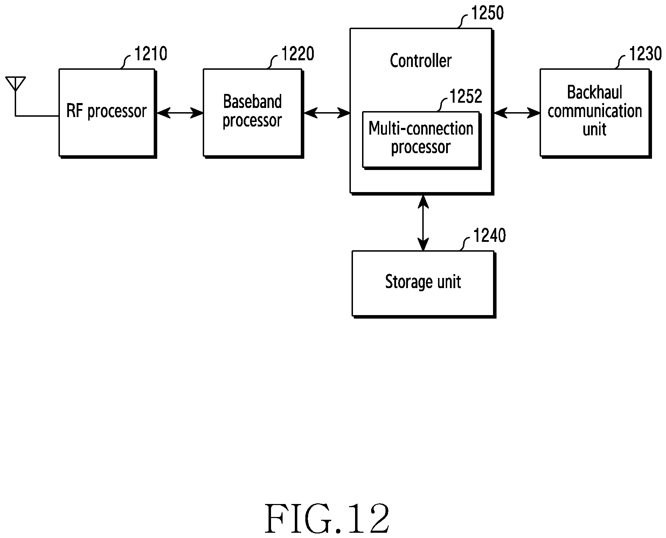

FIG. 12 illustrates a base station device according to various embodiments of the disclosure. According to an embodiment, a base station of FIG. 12 may be included in the network described above.

As illustrated in FIG. 12, the base station may include an RF processor 1210, a baseband processor 1220, a backhaul communication unit 1230, a storage unit 1240, and a controller 1250. The configuration of the base station is not limited to the exemplary configuration illustrated in FIG. 12, and the base station may include more or fewer elements, compared to the elements illustrated in FIG. 12. The RF processor 1210 may perform a function, such as signal band change, amplification, etc., for transmitting or receiving a signal through a wireless channel. For example, the RF processor 1210 may upconvert a baseband signal provided from the baseband processor 1220, into an RF band signal, and then transmit the RF band signal through an antenna, and may downconvert an RF band signal received through the antenna, into a baseband signal. For example, the RF processor 1210 may include a transmission filter, a reception filter, an amplifier, a mixer, an oscillator, a DAC, an ADC, and the like. In FIG. 12, only one antenna is illustrated, but the RF processor 1210 may include a plurality of antennas. Furthermore, the RF processor 1210 may include a plurality of RF chains. Furthermore, the RF processor 1210 may perform beamforming. To perform the beamforming, the RF processor 1210 may adjust the phase and size of each of the signals transmitted or received via multiple antennas or antenna elements. The RF processor 1210 may perform a downlink MIMO operation by transmitting one or more layers.

The baseband processor 1220 may perform a function of conversion between a baseband signal and a bitstream according to a physical layer specification. For example, at the time of data transmission, the baseband processor 1220 may generate complex symbols by encoding and modulating a transmission bitstream. In addition, at the time of data reception, the baseband processor 1220 may reconstruct a reception bit stream by demodulating and decoding a baseband signal provided from the RF processor 1210. For example, in a case where an OFDM scheme is applied, when data is transmitted, the baseband processor 1220 may generate complex symbols by encoding and modulating a transmission bitstream, map the generated complex symbols to subcarriers, and then configure OFDM symbols through IFFT calculation and CP insertion. In addition, when data is received, the baseband processor 1220 may divide a baseband signal provided from the RF processor 1210, by the units of OFDM symbols, reconstruct signals mapped to subcarriers, through FFT, and then reconstruct a reception bit stream through demodulation and decoding. The baseband processor 1220 and the RF processor 1210 may transmit and receive a signal as described above. Accordingly, the baseband processor 1220 and the RF processor 1210 may be called a transmitter, a receiver, a transceiver, a communication unit, or a wireless communication unit. The base station may transmit or receive a signal to or from a UE by using the baseband processor 1220 and the RF processor 1210, and the signal may include control information and data.

The backhaul communication unit 1230 may provide an interface for performing communication with other nodes within a network. For example, the backhaul communication unit 1230 may convert, into a physical signal, a bit stream transmitted from the main base station to another node, for example, an auxiliary base station, a core network, etc., and may convert a physical signal received from another node, into a bit stream.

The storage unit 1240 may store data such as a basic program, an application program, and configuration information for an operation of the main base station. For example, the storage unit 1240 may store information on a bearer assigned to a connected UE, a measurement result reported from a connected UE, etc. In addition, the storage unit 1240 may store information serving as a criterion for determination of whether to provide or stop providing multi-connection to a UE. The storage unit 1240 may provide stored data in response to a request of the controller 1250. The storage unit 1240 may be configured by a storage medium such as a ROM, a RAM, a hard disk, a CD-ROM, and a DVD, or a combination of storage mediums. In addition, the storage unit 1240 may be configured by a plurality of memories. According to an embodiment of the disclosure, the storage unit 1240 may store a program for performing a handover according to the disclosure.

The controller 1250 may control overall operations of a main base station. For example, the controller 1250 may transmit or receive a signal via the baseband processor 1220 and the RF processor 1210, or via the backhaul communication unit 1230. In addition, the controller 1250 may record and read data in and from the storage unit 1240. To this end, the controller 1250 may include at least one processor. In addition, according to an embodiment of the disclosure, the controller 1250 may include a multi-connection processor 1252 configured to process a process operated in a multi-connection mode.

According to various embodiments of the disclosure, a method performed by a base station in a wireless communication system may include receiving, from a terminal, information on an extended reality (XR) multi-modal traffic service, transmitting, to the terminal, a first radio resource control (RRC) configuration message including connection configuration information, based on the received information on the multi-modal traffic service, receiving, from a core network (CN) entity, information on a quality of service (QoS) related to a changed protocol data unit (PDU) session, based on a PDU session modification request message transmitted by the terminal, based on the first RRC configuration message, and transmitting a second RRC configuration message including new connection configuration information to the terminal, based on the received information on the QoS.

According to various embodiments of the disclosure, a base station in a wireless communication system may include at least one transceiver and at least one processor functionally coupled to the at least one transceiver, wherein the at least one processor is configured to receive, from a terminal, information on an extended reality (XR) multi-modal traffic service, transmit, to the terminal, a first radio resource control (RRC) configuration message including connection configuration information, based on the received information on the multi-modal traffic service, receive, from a core network (CN) entity, information on a quality of service (QoS) related to a changed protocol data unit (PDU) session, based on a PDU session modification request message transmitted by the terminal, based on the first RRC configuration message, and transmit a second RRC configuration message including new connection configuration information to the terminal, based on the received information on the QoS.

Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

In addition, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the disclosure, the term "computer program product" or "computer readable medium" is used to generally refer to a medium such as a memory, a hard disk installed in a hard disk drive, or a signal. The "computer program product" or "computer readable medium" is an element that is provided to a method for reporting UE capability in a wireless communication system according to the disclosure.

The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium. As an example, the "non-transitory storage medium" may include a buffer in which data is temporarily stored

According to an embodiment, methods according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., Play Store TM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

The embodiments of the disclosure described and shown in the specification and the drawings are merely specific examples that have been presented to easily explain the technical contents of the disclosure and help understanding of the disclosure, and are not intended to limit the scope of the disclosure. That is, it will be apparent to those skilled in the art that other variants based on the technical idea of the disclosure may be implemented. Also, the above respective embodiments may be employed in combination, as necessary. For example, a part of one embodiment of the disclosure may be combined with a part of another embodiment to operate a base station and a terminal. In addition, the embodiments of the disclosure may be applied to other communication systems and other variants based on the technical idea of the embodiments may also be implemented. For example, the embodiments may be applied to LTE, 5G, NR, or 6G systems. Therefore, the scope of the disclosure should not be defined as being limited to the embodiments set forth herein, but should be defined by the appended claims and equivalents thereof.

## Claims

1. A terminal in a wireless communication system, the terminal comprising:
a transceiver; and
a controller coupled to the transceiver,
wherein the controller is configured to:
in case that first information related to a service for extended reality (XR) multi-modal traffic is added or changed, receive, from a base station, configuration information instructing to report second information related to the first information;
based on the configuration information, transmit, to the base station, the second information including at least one of traffic characteristic information on each of at least one data radio bearer (DRB) servicing the multi-modal traffic, or new configuration information preferred by each of the at least one DRB; and
receive, from the base station, a first radio resource control (RRC) reconfiguration message including changed information on each of the at least one DRB.

2. The terminal of claim 1, wherein the traffic characteristic information comprises information on at least one of a period, an estimated packet arrival time, a packet size, or an allowable packet error rate (PER).

3. The terminal of claim 1, wherein the new configuration information comprises configured grant (CG) configuration information or semi-persistent scheduling (SPS) configuration information,
wherein the CG configuration information comprises information on at least one of a period, a time domain offset, and a timer, and
wherein the SPS configuration information comprises information on at least one of a period or an activation time.

4. The terminal of claim 1, wherein the controller is further configured to:
transmit a protocol data unit (PDU) session modification request message to a core network (CN) node; and
receive, from the base station, a second RRC reconfiguration message including a QoS profile updated based on the PDU session modification request message.

5. The terminal of claim 1, wherein the controller is further configured to:
identify whether an XR terminal group or XR flow group related to the service for the XR multi-modal traffic is required to be changed;
transmit, to the base station, information on the XR terminal group or XR flow group and information on a synchronization requirement; and
receive, from the base station, a third RRC reconfiguration message including changed information on the XR terminal group or XR flow group, and
wherein the information on the synchronization requirement comprises information on at least one of a synchronization gap threshold or a synchronization failure rate threshold.

6. A base station in a wireless communication system, the base station comprising:
a transceiver; and
a controller coupled to the transceiver,
wherein the controller is configured to:
in case that first information related to a service for extended reality (XR) multi-modal traffic is added or changed, transmit, to a terminal, configuration information instructing to report second information related to the first information;
based on the configuration information, receive, from the terminal, the second information including at least one of traffic characteristic information on each of at least one data radio bearer (DRB) servicing the multi-modal traffic, or new configuration information preferred by each of the at least one DRB; and
transmit, to the terminal, a first radio resource control (RRC) reconfiguration message including changed information on each of the at least one DRB.

7. The base station of claim 6, wherein the traffic characteristic information comprises information on at least one of a period, an estimated packet arrival time, a packet size, or an allowable packet error rate (PER).

8. The base station of claim 6, wherein the new configuration information comprises configured grant (CG) configuration information or semi-persistent scheduling (SPS) configuration information,
wherein the CG configuration information comprises information on at least one of a period, a time domain offset, and a timer, and
wherein the SPS configuration information comprises information on at least one of a period or an activation time.

9. The base station of claim 6, wherein the controller is further configured to:
receive, from a core network (CN) node, information on a QoS profile updated based on a protocol data unit (PDU) session modification request message of the terminal; and
transmit, to the terminal, a second RRC reconfiguration message including the updated QoS profile.

10. The base station of claim 6, wherein the controller is further configured to:
receive, from the terminal, information on an XR terminal group or XR flow group required to be changed, related to the service for the XR multi-modal traffic, and information on a synchronization requirement; and
transmit, to the terminal, a third RRC reconfiguration message including changed information on the XR terminal group or XR flow group, and
wherein the information on the synchronization requirement comprises information on at least one of a synchronization gap threshold or a synchronization failure rate threshold.

11. A method performed by a terminal in a wireless communication system, the method comprising:
in case that first information related to a service for extended reality (XR) multi-modal traffic is added or changed, receiving, from a base station, configuration information instructing to report second information related to the first information;
based on the configuration information, transmitting, to the base station, the second information including at least one of traffic characteristic information on each of at least one data radio bearer (DRB) servicing the multi-modal traffic, or new configuration information preferred by each of the at least one DRB; and
receiving, from the base station, a first radio resource control (RRC) reconfiguration message including changed information on each of the at least one DRB.

12. The method of claim 11, wherein the traffic characteristic information comprises information on at least one of a period, an estimated packet arrival time, a packet size, or an allowable packet error rate (PER).

13. The method of claim 11, wherein the new configuration information comprises configured grant (CG) configuration information or semi-persistent scheduling (SPS) configuration information,
wherein the CG configuration information comprises information on at least one of a period, a time domain offset, and a timer, and
wherein the SPS configuration information comprises information on at least one of a period or an activation time.

14. The method of claim 11, further comprising:
transmitting a protocol data unit (PDU) session modification request message to a core network (CN) node; and
receiving, from the base station, a second RRC reconfiguration message including a QoS profile updated based on the PDU session modification request message.

15. The method of claim 11, further comprising:
identifying whether an XR terminal group or XR flow group related to the service for the XR multi-modal traffic is required to be changed;
transmitting, to the base station, information on the XR terminal group or XR flow group and information on a synchronization requirement; and
receiving, from the base station, a third RRC reconfiguration message including changed information on the XR terminal group or XR flow group,
wherein the information on the synchronization requirement comprises information on at least one of a synchronization gap threshold or a synchronization failure rate threshold.
